# EUROPEAN PATENT APPLICATION

(11) **EP 3 699 811 A1**
(43) Date of publication of application: **26.08.2020**
(21) Application number: 19158434.1
(22) Date of filing: 21.02.2019
(51) Int. Cl.: G06K 9/00

(54) **MACHINE-IMPLEMENTED BEAUTY ASSISTANT FOR PREDICTING FACE AGING**

(71) Applicant: L'OREAL, 75008 Paris (FR)
(72) Inventor: CASSIER, Matthieu, 94152 Chevilly Larue (FR); FLAMENT, Frédéric, 92110 Clichy (FR); VIDART, Thierry, 92300 Levallois-Perret (FR); JIAN, Valentine, 92300 Levallois-Perret (FR); NEGRE, Caroline, 92300 Levallois-Perret (FR)

(57) **Abstract**

A first data is accepted by one or more processing circuits from a user depicting a user's external body portion. Machine learning models stored in one or more memory circuits are applied to the first data to classify the external body portion characteristics. A predicted information of the aging of the external body portion is provided to the user based on the classified external body portion characteristics.

## Description

### BACKGROUND

### 1. Field of the Invention

The present invention involves methods and systems for predicting and/or tracking changes of one or more conditions of an external body portion of a subject. The invention may have applicability in predicting future evolution of one or more external body conditions.

### 2. Description of Related Art

Individuals always have a curiosity in learning about what will happen in the future. One particular area of interest relates to an individual's curiosity about how she will look in the future. Since a "crystal ball" or "time machine" exist only in fairy tales and science fiction, an exact forecast of an individual's future appearance is impossible to attain. With the advancement of modern research techniques and data processing devices, however, somewhat accurate assessments of an individual's prognosis are becoming more and more possible.

One area where there is a particular interest in using information relating to an individual's future outlook is in the field of beauty. As an individual grows older, she may develop conditions such as wrinkles, skin lines, hair loss, and skin discolorations, such as those caused by over-exposure to the sun or more generally to her lifestyle. It is known that if, at least some of these conditions may be eliminated, reduced, the ageing might be slowed to a less aggressive pace.

US6761697 discloses a method enabling consumers to understand the future outlook of their personal appearance making individuals aware of how much better they might look in the future if they use certain beauty products earlier in their life. This method provides a means to encourage individuals to purchase a greater number of those products and to use them throughout their life. In this method, future personal information about the lifestyle of the consumer might be required. Nevertheless, these data are not processed to generate a prediction of the ageing of the consumer depending on a lifestyle. Moreover, this document gives no comparison between the look of the consumer according to future data and current data.

As a consequence, the method according to US6761697 doesn't encourage the consumer to change or to maintain his lifestyle, as no comparison between the effect of lifestyles over his outlook are delivered. In other word, this document doesn't disclose the evolution of an external body portion without changing his lifestyle and with changing his lifestyle.

Therefore, there is a need for an interactive device which is able to manage data received from a user, to show him the effect of a modification of his lifestyle over his outlook, so that he might realize the interest of keeping his lifestyle or changing it.

### OBJECT AND SUMMARY OF THE INVENTION

The problem of the invention is to provide a system enabling consumers to understand how much the future outlook of their personal appearance depends of their lifestyle. For example, making individuals aware of how much better they might look in the future if they live under certain conditions early in their life. This might provide a means to encourage individuals to find better lifestyle in the future.

In a first aspect, the invention relates to a system comprising:
one or more memory circuits configured to store machine learning models; and
one or more processing circuits configured to:
   accept at least one first data depicting a user's external body portion in a first time frame;
   accept at least one second data from depicting the user's first lifestyle in the first time frame;
   apply the machine learning models to the first data to classify the external body portion characteristics;
   apply the machine learning models to the second data to classify the first lifestyle characteristics;
   and
   generate a predicted information of the aging of the user's external body portion in a second time frame based on the classified external body portion characteristics of the first time frame and on the classified first lifestyle characteristics of the first time frame, the predicted information comprising the evolution of the user's external body portion if the classified first lifestyle characteristics remains the same during the second time frame than during the first time frame.

According to a first embodiment of the system according to the invention, the processing circuits are further configured to process the first data to progress the user's external body portion in a simulated condition of a second lifestyle in the second timeframe.

The method may include receiving a first data and receiving second data. The first data may be representative of one or more conditions of the subject's external body portion in a first time frame, and the second data may be representative of the subject's lifestyle at the first time frame. The method may further include generating a forecasted evolution of the external body portion and transmitting the forecasted evolution to the subject. The generation of the forecasted evolution is based on the first data and the second data. The forecasted evolution could be in a variety of differing forms, such as diagrams, graphs, charts, and other representations.

In the first embodiment according to the invention, a second lifestyle condition might be proposed by the consumer or by an operator. The system simulates the ageing of the person also under these second conditions. Of course, a third, a fourth lifestyle conditions might be added to the second lifestyle condition to stimulate with more accuracy the ageing of the external body portion. These additional lifestyle conditions might be processed separately also.

Preferably, he second data is not a beauty habit, such as a beauty care habit or a make-up habit.

In one example, the generation of the forecasted evolution may include extrapolating at least the first and second data to forecast how the external body portion will change in the future.

Preferably, the first time frame represents the current time, at the day when the consumer uses the system.

Preferably, the second time frame represents a future time frame, such as days or even years after the consumer has used the system.

Preferably, the first data is an image, notably a two-dimensional image, a three-dimensional image, a scanned image, and a representation of one of a mechanical measurement and an optical measurement.

According to the invention, the system receives at least two data representing the current time frame. Accordingly, this double data generates a reference or a calibration of the system at the current time frame. This calibration takes into account not only the current outlook but also the condition of life of the consumer up to the current date.

For example, the system receives an image of the consumer and the data that he smokes. Then the system proceeds both of these data to simulate a future face.

In a second aspect, the invention relates to a method comprising:
accepting at least one first data depicting a user's external body portion in a first time frame;
accepting at least one second data from depicting the user's first lifestyle in the first time frame;
applying the machine learning models to the first data to classify the external body portion characteristics;
applying the machine learning models to the second data to classify the first lifestyle characteristics;
and
generating a predicted information of the aging of the user's external body portion in a second time frame based on the classified external body portion characteristics of the first time frame and on the classified first lifestyle characteristics of the first time frame, the predicted information comprising the evolution of the user's external body portion if the classified first lifestyle characteristics remains the same during the second time frame than during the first time frame.

According to a first embodiment of the process according to the invention, it further comprises processing the first data to progress the user's external body portion in a simulated condition of a second lifestyle in the second timeframe.

### MAIN DEFINITION

Examples of external body portions may include hair, skin, nails, face, scalp, neck, eye regions, ears, torso, arms, legs, and/or other parts of the subject's body.

Preferably, the external body portion is the face.

The "external body portions characteristics" might be chosen among pore size, elasticity, dryness, cellulitis, sweating, aging, wrinkles, melanoma, exfoliation, desquamation, homogeneity of color, micro-circulation, shininess, softness, smoothness, hydration, sebum production, cleanliness, irritation, redness, vasodilation, vasoconstriction, pigmentation, and freckles.

The "data" may include an answer and/or response to at least one query prompting the subject to provide data about the subject. The query may be in the form of a question, survey, and/or prompt encouraging the subject to provide certain personal data concerning his lifestyle. It can also be an image.

The "lifestyle" may include environmental exposure, demographics, nutritional information, environmental information, eating habits; geographic location of the individual's residence, location, work habits; sleep habits; toiletries used; exercise habits; relaxation habits; beauty care habits; smoking and drinking habits; sun exposure habits; use of sunscreen; propensity to tan; number of sunburns and serious sunburns; dietary restrictions; dietary supplements or vitamins used; travel habits; entertainment preferences; hobbies; marital status; whether the subject is a parent; country of residence; region of residence; whether the subject is an urban dweller suburban dweller or rural area dweller; size of urban area in which the subject lives; whether the subject is retired; or any other information reflecting habits, preferences, or affiliations of the subject.

At the end of the process, the "information" may operate on the user's facial images to portray how the user's face would appear sometime in the future under the provided data. Such progression may be in age, for which age progression techniques may be deployed, or may be in appearance resulting from adherence to a lifestyle. The information may be provided under the form of a video. A client interface may present a film or photograph of a person's face as the information provided by the system according to the invention.

Preferably, the lifestyle includes at least the country of residence. This knowledge is of high relevancy to predict the evolution of the external body portion.

More preferably, the lifestyle includes at least two datas.

Preferably, the 'lifestyle" doesn't include cosmetic habits, cosmetic routine, cosmetic uses, cosmetic regimen, hair or skin make-up practices, hair or skin care practice, sun care customs.

One or more first data are accepted by one or more processing circuits from a user depicting the user's facial skin. In an embodiment, machine learning models stored in one or more memory circuits are applied to the one or more first data to classify facial skin characteristics, identify significant objects, determine beauty trends, and the like. In an embodiment, a regimen recommendation is provided to the user based on the classified facial skin characteristics.

### PREFERRED EMBODIMENTS

According to further advantageous aspects of the invention, the system comprises one or several of the following features taken in isolation or in any technically possible combinations:
- The simulated condition under the second lifestyle is that of the user's external body portion if he changes his first lifestyle, such as the nervous stress, the place of live, the climate, the pollution condition, the demographic condition, the social activity or the physical activity in the second time frame.
- One or more processing circuits is further configured to:
   accept a third data from a user depicting the user's external body portion at least in one of the first time frame or the second time frame;
   apply the machine learning models to the third data to classify external body portion characteristics at least in one of the first time frame or the second time frame; and
   update the predicted information to the user based on the classified external body portion characteristics of the third data.
- The one or more processing circuits are physically separated into a client platform and a service platform communicatively coupled through a communication network.
- The one or more processor circuits are further configured to:
   accept input from a plurality of users that classify the external body portion characteristics from training first data provided thereto; and
   train the models using the accepted input.

According to further advantageous aspects of the invention, the method comprises one or several of the following features taken in isolation or in any technically possible combinations:
- The simulated future condition of a second lifestyle is that of the user's external body portion when he changes his first lifestyle, such as the nervous stress, the place of live, the climate, the pollution condition, the demographic condition or the physical activity.
- It further comprises:
   accepting a third data from a user depicting the user's external body portion at least in one of the first time frame or the second time frame;
   applying the machine learning models to the third data to classify external body portion characteristics at least in one of the first time frame or the second time frame; and
   updating the predicted information to the user based on the classified external body portion characteristics of the third data.
- It further comprises:
   accepting input from a plurality of users that classify the external body portion characteristics from training first data provided thereto; and
   training the models using the accepted input.

### DESCRIPTION OF DRAWINGS

FIG. 1 is a schematic block diagram of an example system configuration by which the present general inventive concept can be embodied.
FIG. 2 is a flow diagram of a simple user interaction with an embodiment of the present general inventive concept.

The present inventive concept is best described through certain embodiments thereof, which are described herein with reference to the accompanying drawings, wherein like reference numerals refer to like features throughout. It is to be understood that the term *invention*, when used herein, is intended to connote the inventive concept underlying the embodiments described below and not merely the embodiments themselves. It is to be understood further that the general inventive concept is not limited to the illustrative embodiments described below and the following descriptions should be read in such light.

Additionally, the word *exemplary* is used herein to mean, "serving as an example, instance or illustration." Any embodiment of construction, process, design, technique, etc., designated herein as exemplary is not necessarily to be construed as preferred or advantageous over other such embodiments. Particular quality or fitness of the examples indicated herein as exemplary is neither intended nor should be inferred.

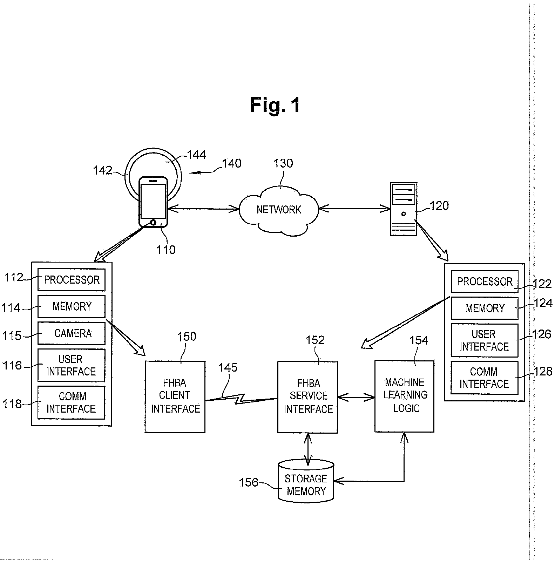

FIG. 1 is a schematic block diagram of an exemplary facial health and beauty assistant (FHBA) system 100 comprising an FHBA client platform 110 and an FHBA service platform 120 communicatively coupled through a network 130. In one embodiment, FHBA client platform 110 is a smartphone, tablet computer or other mobile computing device, although the present invention is not so limited. As illustrated in FIG. 1, exemplary FHBA client platform 110 comprises a processor 112, memory 114, a camera 115, a user interface 116 and a communication interface 118 over which an FHBA client interface 140 may be implemented. FHBA client interface 140 provides the primary portal through which a user accesses FHBA system 100.

In one embodiment of the present invention, FHBA service platform 120 comprises one or more server computers, each comprising a processor 122, a memory 124, a user interface 126 and a communication interface. These resources of FHBA service platform 120 may be utilized to implement an FHBA service interface 152, machine learning logic 154 and a storage memory 156. Storage memory 156 represents a sufficient amount of volatile and persistent memory to embody the invention. Storage memory 156 may contain vast amounts of encoded human knowledge as well as space for the private profile of a single user. Storage memory 156 may further store processor instructions that, when executed by one or more processors 122, perform some task or procedure for embodiments of the invention. Storage memory 156 may further store user models (coefficients, weights, processor instructions, etc.) that are operable with machine learning logic 154 to predict the aging of the user's face according to his lifestyle.

Exemplary FHBA service interface 152 provides the infrastructure by which network access to FHBA services are both facilitated and controlled. FHBA client interface 140 and FHBA service interface 152 communicate via a suitable communication link 145 using the signaling and data transport protocols for which communication interface 118 and communication interface 128 are constructed or otherwise configured. FHBA service interface 156 may implement suitable Internet hosting services as well as authentication and other security mechanisms that allow access only to authorized users and protect the users' private data. Additionally, FHBA service interface 152 may realize an application programming interface (API) that affords FHBA client interface 140 communication with, for example, machine learning logic 154. Those having skill in the art will recognize other front-end services that can be used in conjunction with the present invention.

Machine learning logic 154 provides the infrastructure for embodiments of the invention to learn from and make predictions about data without being explicitly programmed to do so. In certain embodiments, machine learning logic 154 implements one or more convolutional neural networks (CNNs), the models for which may be trained using open source datasets or crowdsourced data sets, as explained below. Other machine learning techniques may be used in conjunction with the present invention including, but not limited to, decision tree learning, association rule learning, artificial neural networks, deep learning, inductive logic programming, support vector machines, clustering, Bayesian networks, reinforcement learning, representation learning, similarity and metric learning, sparse dictionary learning, genetic algorithms, rule-based machine learning and learning classifiers. Additional techniques described in U.S. Patent No. 8,442,321, U.S. Patent No. 9,015,083, U.S. Patent No. 9,536,293, U.S. Patent No. 9,324,022, and U.S. PG Publication No. 2014/0376819 A1, all of which are incorporated herein by reference, may be used with the present invention. In the descriptions that follow, it will be assumed that machine learning logic implements a convolutional neural network, although the present invention is not so limited. Those having skill in artificial intelligence will recognize numerous techniques that can be used in conjunction with the present invention without departing from the spirit and intended scope thereof.

Embodiments of the invention determine a prediction of face aging for a user based on first datas of the user taken by camera 116 on FHBA client platform 110 and on data given by the user about his lifestyle on the user interface 116. In certain embodiments, the first data of the user's face are preferably obtained under conditions of uniform lighting that is consistent over time. To that end and referring to FIG. 1, embodiments of the invention provide for a mirror device 140 that includes mirror surface 144 circumscribed by a ring illuminator 142. This configuration is intended to define a temporally constant standard of illumination. When the invention is so embodied, temporally varying characteristics in first data a user's face are more readily recognized and labeled. The user interface 116 can be a survey or a quizz.

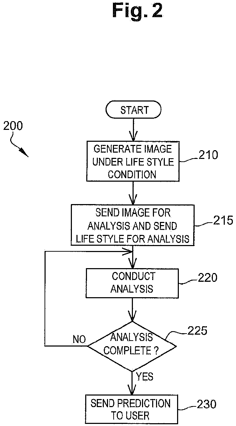

FIG. 2 is a flow diagram by which an example interaction with an embodiment of the invention can be explained. The interaction of FIG. 2 is simple by design and is no way intended to be limiting. The description of FIG. 2 is intended to illustrate functionality of the configuration illustrated in FIG. 1. Further features of the invention, beyond those described with reference to FIG. 2, will be discussed below.

In operation 210, a user may generate a first data of his face, such as by camera 116 of FHBA client platform 110. This may be achieved with or without the illumination standard discussed above. In operation 215, the user's first data is sent to FHBA service platform 120. This may be achieved by suitable communication protocols shared between FHBA client platform 110 and FHBA service platform 120 to realize communication link 145.

A user may respond to a set of question to generate a description of his lifestyle, explaining for example where he lives, what is his degree of nervous stress or what is his activity in order to generate a data.

Once the analysis of data issued from 210 have been completed, process 200 may transition to operation 215, whereby the analyses results and/or updates of analysis are sent to the processor to generate an image that takes into account the complete analysis resulting from step 210.

In operation 220, first data analysis and second data analysis and machine learning is conducted to predict the user's face aging. Machine learning logic 154 may perform analyses that determine, among other things, apparent age, i.e., the subjective age of the user estimated from a visual appearance of the user's face; evenness of facial skin tone (is there blotching, age/sun spots, acne scarring and other blemishes); the presence of stress as seen in under eye puffiness, dark circles, overall tone drooping in eyelids/comers of the mouth, fine lines and eye redness; hydration level, often referred to as plump or slick, which presents as a lack of ashy-ness, skin flaking, dullness and fine lines; shine - a nonlinear parameter where the ideal is a moderate amount of shine; condition of pores - a reduced appearance of pores is desirable as it provides a healthy, youthful and smooth skin texture; the presence of acne as characterized by red/inflamed pimples and scarring; the presence of wrinkles, a fold, ridge or crease in the skin may be discovered through the analysis; the presence of sagging, i.e., a droopy appearance of soft tissue caused by elasticity reduction and the presence of crow's feet, a branching wrinkle specifically located at the outer corner of a person's eye. Other conditions of the skin may be determined by machine learning logic 154. Further details of the analyses are provided below.

Once the analysis of data has been completed from 225, process 200 may transition to operation, whereby the analyses results and/or updates of analysis are sent to the processor to generate an image that takes into account the complete analysis resulting from step 225.

In operation 225, it is determined whether the analysis is complete and, responsive to a positive determination thereof, process 200 may transition to operation 230, whereby FHBA service interface 152 gives a prediction of the skin ageing of the user to FHBA client interface 140 taking into account both the image and a lifestyle condition.

Alternatively, data about the lifestyle of the consumer can be generated by the service platform 120. The, the image may be generated at step 210 on the basis of the data communicated by the service platform 120. At the end on the process 200, the prediction might occur under data coming either from the client platform 110 or from the service platform 120. Comparison between predictions based on data from the client platform 110 or from the service platform 120 might be proposed to the consumer.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be, for example, but is not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a solid state disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, a phase change memory storage device, or any suitable combination of the foregoing. In the context of this document, a computer readable storage medium may be any tangible medium that can contain, or store a program for use by or in connection with an instruction execution system, apparatus, or device.

Computer program code for carrying out operations for aspects of the present invention may be written in any combination of one or more programming languages, e.g., an object oriented programming language such as Java, Smalltalk, C++ or the like, or a conventional procedural programming language, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). It is to be understood that the software for the computer systems of the present invention embodiments may be developed by one of ordinary skill in the computer arts based on the functional descriptions contained in the specification and flow charts illustrated in the drawings. Further, any references herein of software performing various functions generally refer to computer systems or processors performing those functions under software control.

The computer systems of the present invention embodiments may alternatively be implemented by any type of hardware and/or other processing circuitry. The various functions of the computer systems may be distributed in any manner among any quantity of software modules or units, processing or computer systems and/or circuitry, where the computer or processing systems may be disposed locally or remotely of each other and communicate via any suitable communications medium (e.g., LAN, WAN, Intranet, Internet, hardwire, modem connection, wireless, etc.).

The foregoing examples are illustrative of certain functionality of embodiments of the invention and are not intended to be limiting. Indeed, other functionality and other possible use cases will be apparent to the skilled artisan upon review of this disclosure.

## Claims

1. A system comprising:
one or more memory circuits (114, 124) configured to store machine learning models; and
one or more processing circuits (112, 122) configured to:
accept at least one first data depicting a user's external body portion in a first time frame;
accept at least one second data from depicting the user's first lifestyle in the first time frame;
apply the machine learning models to the first data to classify the external body portion characteristics;
apply the machine learning models to the second data to classify the first lifestyle characteristics;
and
generate a predicted information of the aging of the user's external body portion in a second time frame based on the classified external body portion characteristics of the first time frame and on the classified first lifestyle characteristics of the first time frame, the predicted information comprising the evolution of the user's external body portion if the classified first lifestyle characteristics remains the same during the second time frame than during the first time frame.

2. The system of claim 1, wherein the one or more processors (112, 122) are further configured to process the first data to progress the user's external body portion in a simulated condition of a second lifestyle in the second timeframe.

3. The system of claim 2, wherein the simulated condition under the second lifestyle is that of the user's external body portion if he changes his first lifestyle, such as the nervous stress, the place of live, the climate, the pollution condition, the demographic condition, the social activity or the physical activity in the second time frame.

4. The system of any of the preceding claims, wherein the one or more processing circuits (112, 122) is further configured to:
accept a third data from a user depicting the user's external body portion at least in one of the first time frame or the second time frame;
apply the machine learning models to the third data to classify external body portion characteristics in at least in one of the first time frame or the second time frame; and
update the predicted information to the user based on the classified external body portion characteristics of the third data.

5. The system of any of the preceding claims, wherein the one or more processing circuits (112, 122) are physically separated into a client platform and a service platform communicatively coupled through a communication network.

6. The system of any of the preceding claims, wherein the one or more processor circuits (112, 122) are further configured to:
accept input from a plurality of users that classify the external body portion characteristics from training first data provided thereto; and
train the models using the accepted input.

7. A method comprising:
accepting at least one first data depicting a user's external body portion in a first time frame;
accepting at least one second data from depicting the user's first lifestyle in the first time frame;
applying the machine learning models to the first data to classify the external body portion characteristics;
applying the machine learning models to the second data to classify the first lifestyle characteristics;
and
generating a predicted information of the aging of the user's external body portion in a second time frame based on the classified external body portion characteristics of the first time frame and on the classified first lifestyle characteristics of the first time frame, the predicted information comprising the evolution of the user's external body portion if the classified first lifestyle characteristics remains the same during the second time frame than during the first time frame.

8. The method of claim 7 further comprising processing the first data to progress the user's external body portion in a simulated condition of a second lifestyle in the second timeframe.

9. The method of claim 8, wherein the simulated future condition of a second lifestyle is that of the user's external body portion when he changes his first lifestyle, such as the nervous stress, the place of live, the climate, the pollution condition, the demographic condition or the physical activity.

10. The method of any of claims 7 to 9 further comprising:
accepting a third data from a user depicting the user's external body portion at least in one of the first time frame or the second time frame;
applying the machine learning models to the third data to classify external body portion characteristics at least in one of the first time frame or the second time frame; and
updating the predicted information to the user based on the classified external body portion characteristics of the third data.

11. The method of claim 7 to 10 further comprising:
accepting input from a plurality of users that classify the external body portion characteristics from training first datas provided thereto; and
training the models using the accepted input.
